# EUROPEAN PATENT SPECIFICATION

(11) **EP 2 522 236 B1**
(45) Date of publication and mention of the grant of the patent: **08.01.2014**
(21) Application number: 12167138.2
(22) Date of filing: 08.05.2012
(51) Int. Cl.: A23L 3/02, A23L 3/04

(54) **Method and apparatus for enhanced performance of a conventional continuous hydrostat**
Verfahren und Vorrichtung zur verbesserten Leistung auf einem herkömmlichen kontinuierlichem Hydrostat
Procédé et appareil pour améliorer les performances d'un hydrostat continu conventionnel

(30) Priority: 09.05.2011 US 201161483923 P
(43) Date of publication of application: 14.11.2012
(73) Proprietor: Newman, Paul Bernard, San Diego, CA 92028 (US)
(72) Inventor: Newman, Paul Bernard, San Diego, CA 92028 (US)
(74) Representative: Riemens, Roelof Harm

(56) References cited:
- EP-A1- 2 223 618
- WO-A1-00/27229
- WO-A1-2008/093367
- DE-A1- 2 334 443
- US-A- 3 377 173
- US-A- 6 017 572

## Description

### FIELD OF INVENTION

The present invention relates to a method and apparatus for accelerated continuous processing of foodstuffs using a conventional continuous sterilizing system without significant structural modification, utilizing a medium that is essentially neither water nor steam, nor requires any additional system pressurization nor any change of state of the thermal processing medium to generate the required processing conditions. In particular it relates to sterilizing or pasteurizing systems. A further aspect of the invention is that it can be safely used for direct or indirect contact foodstuffs as it is comprised solely of components that are, at least, GRAS classified. Further aspects of this invention relate to an increase in system flexibility, a method of cost effectively increasing the throughput capacity and improved product organoleptic properties. Finally, it relates to continuously eliminating the corrosive properties of conventional thermal processing media.

### BACKGROUND TO THE INVENTION

Food and drink products are highly susceptible to both microbial contamination and organoleptic deterioration. Methods for extending shelf-life have been known for thousands of years, long before the roles of spoilage and pathogenic microorganisms were known.

As the mechanisms of enzymic and microbial food spoilage and food contamination by pathogenic organisms have become better understood, so has the sophistication of the methods developed to minimize their effects or eliminate their presence, (Newman, USPA 61/480521 summarizes the principle physical, chemical and biochemical methods employed).

Despite the extensive selection of methods available, one method is by far the most prevalent irrespective of whether the application is domestic or industrial in nature, namely, the heating, holding and cooling of the foodstuff using a thermal processing medium such as air, water or steam.

Even this one approach has developed into many different variants, including the use of dry or wet heat, continuous or batch, static or moving, aseptic or non-aseptic environments, etc., so as to optimize the processing method chosen to best suit the foodstuff properties, the shelf-life requirements, the type of organisms present and needed to be eliminated and many other, product-specific properties and requirements.

However, two other factors, those of cost and related cost performance, have become steadily more prevalent, since the turn of this century, with energy and associated running costs increasingly important.

The value of a foodstuff and particularly its ultimate retail value, is based on many factors including its scarcity, its degree of further processing, its flexibility as a foodstuff, its supply and demand, its resultant quality-related organoleptic properties and many others.

The method chosen to process any foodstuff, is highly dependent on a wide range of factors including the amount of shelf-life required, the availability of refrigeration before and after processing, the amount of refrigeration needed before and after processing, the robustness of the foodstuff raw materials or finished products to harsh processing methods and practices and the prevalence and virulence of spoilage and/or pathogenic organisms.

There are four primary types of food treatment for the purpose of extending shelf-life and minimizing pathogenicity, namely preservation, stabilization, pasteurization and sterilization. Each of these entails a different ratio of the amount of heating and cooling being applied with the more heating involved the less the amount of refrigeration required. Preservation, in the form of refrigeration, imparts no heating into the process and maintains many foods at their highest quality but with minimal shelf-life. However if the degree of refrigeration is increased, e.g. freezing, the shelf-life increases but quality attributes tend to decrease.

Stabilization involves minimal heating and minimal change in food organoleptic properties. A good example is the blanching of many vegetables. Here minimal heat is used to inactivate enzymes within the foodstuff that are the greatest source of product deterioration such as beans, corn and peas. However, it does little to prevent a gradual quality deterioration due to the presence and survival of many spoilage microorganisms and minimally reduces microbial sources of pathogenicity.

As a consequence, preservation and stabilization methods and techniques are generally applied to raw materials to extend the time available for their conversion into more complex, added-value foodstuffs. However, the vast majority of semi-finished or finished food and drink products are subjected to the two most aggressive methods of food preservation, pasteurization and sterilization.

Pasteurization removes an increasing number and type of spoilage organisms from foodstuffs, the effect being proportional to the duration and severity of the treatment, usually heat treatment, applied. It also removes many pathogenic bacteria that are in a vegetative form. It does not, however, control many spore-based sources of pathogenic microorganisms. The foodstuff therefore requires refrigeration, usually in inverse proportion to the severity of the heat treatment applied. The technique usually ensures food safety if adequately processed but eventually the surviving spoilage organisms will sour the milk and taint the fruit juice.

The most extreme food preservation treatment is sterilization. If applied under the right conditions and duration, this treatment will render the foodstuff free of all types of spoilage and pathogenic bacteria and able to be stored almost indefinitely without any refrigeration.

But this usually comes at a great cost to the organoleptic quality of the foodstuff, cost of manufacturing and relative value of the processed product. Ultimately it is the value of the finished product relative to the sum of the total input costs (principally its material, production, preservation and storage costs) that will determine how it will be processed.

A simple example will illustrate. Fresh unpasteurized orange juice has a retail value almost double that of the best pasteurized orange juice, which in turn has a retail value double that of sterilized orange juice. The cost of producing fresh orange juice is less than that of pasteurized. But because of its minimal keeping quality, the product has only a few days not only to be manufactured but also distributed, sold and consumed. As a consequence it has to be rapidly processed and refrigerated at every step from harvest through distribution to final consumption. On the other hand, pasteurized juice while costing more to produce, requires significantly less refrigeration than unpasteurised juice, less expensive transportation and distribution and has a longer shelf-life. It is also more suitable to mass production and the consequent cost advantages of scale, producing 100+ units per minute. Thus its total production costs are lower.

Finally, the cheapest to produce is sterilized juice - it requires no refrigeration. It uses some of the least expensive containers and has the longest shelf-life. While the cost of a continuous sterilization system is a major capital investment, it has a very long operational life and can manufacture at a rate in excess of 600 units per minute, so its long-term unit costs are low. But, in comparison to other processing methods the product it produces has relative poor organoleptic properties and commands the lowest prices. However, improving product attributes so that the finished product approaches pasteurized product quality while still further reducing manufacturing, materials and processing costs give it the greatest potential for optimal cost performance and best financial returns.

. To this end, Newman teaches novel methods and apparatus for enhancing and optimising process performance (USPA 61/488220), significantly improved system process control (USPA 61/478491), increased flexibility in the use of modern, lower cost packaging materials (USPA 478190) and enhanced finished product organoleptic properties, through improvements in enhanced product cooling (USPA 478665). He also teaches a novel method and apparatus for enhanced, controlled continuous sterilized food and drink manufacturing using apparatus that significantly reduces capital equipment costs while greatly improving manufacturing flexibility, (USPA 61/480521).

. While all of these novel developments are intrinsic in the form and function of the new continuous sterilizing systems, they can, for the most part, be cost effectively introduced as retrofit enhancements to existing systems. However it has, up to now, been impossible to introduce all of the new system cost benefits into existing continuous sterilizing systems such as the Stork Hydrostat®, the FMC sterilizer or Malo batch retort. The vertical nature of the chamber/tower construction has made it impossible to replace the continuous water/steam/water arrangement in the sterilizing legs of the continuous processor where the arrangement served two major purposes, the orientation of the structures constrained the steam within a chamber or tower, they also provided the primary mechanism to enable steam under pressure to reach the necessary temperature for effective sterilization. Finally, the original configuration allowed over-pressure or counter-pressure, as needed to be generated on the outer surfaces of the cans and glass jars/bottles so as to prevent rupture due to expansion of the gases in the head of the can and the neck of the jars and bottles.

. Newman (USPA 61/478665) teaches that accelerated cooling significantly improves the organoleptic properties of sterilized food and drink products. It also allows for enhanced throughput and shorter processing times.

. Newman (USPA 61/480521) also teaches that Glycerol can equally be used as both a heating, holding and cooling medium and describes suitable apparatus in which to achieve these benefits. In the pure state, it has a high boiling point of 290°C and a flash point of 176°C. Although generally safe, when contaminated with other products, for example glycols and methanol, through manufacture by biodegradation, it does produce a number of potentially harmful products, including Arcolein, when decomposed by excessive heat.

. However, although the teachings of Newman clearly show that Glycerol can be used for heating, holding and cooling purposes, the apparatus described, in which these physical reactions can occur, are essentially horizontal in configuration, do not include any substantial vertical structures, and, unlike conventional continuous sterilizers, have no discontinuity with the liquid thermal transfer medium, i.e. there is no gaseous portion, nor do they rely on pressure to achieve sterilization temperatures.

. Additionally, the horizontal processing system described by Newman, makes use of a series of discrete separate chambers but with a continuous feed to achieve the required processing conditions.

. What we have surprisingly found is that by modifying the thermal processing conditions, materials and method of operation, we have been able to introduce all of the processing, handling, performance and quality benefits of the optimized horizontal process into conventional batch or continuous sterilizers, in particular Hydrostatic sterilisers without major restructuring or additional capital cost, while eliminating major performance issues such as lack of system flexibility, over-processing and poor process control.

. We have also been able to further optimize the thermal processing medium through modifications of its composition in relation to the thermal requirements of each processing step.

. Furthermore, we have also found we can eliminate the major causes of high system running costs, e.g. corrosion of support structures and chains, the effects of high steam pressure on system structure and inefficient energy use. We will now describe the invention and its principle embodiments.

. Finally, although except for certain combinations of container materials, such as plastic cartons with foil lids, no over-pressurization nor counter-pressurization is needed during any of the processing stages, we have been able to generate such over-pressurization or counter-pressurization as needed using a novel method using a fluid or a combination of fluids which are neither water nor steam.

### SUMMARY OF THE INVENTION

. It is an object of the present invention to produce an optimized method for the accelerated thermal processing of foodstuffs that utilizes the structure and function of a conventional vertical hydrostatic continuous sterilizer.

. It is another object of the invention that the apparatus for effecting such accelerated processing can also be adapted without structural modification to undertake foodstuff pasteurization and foodstuff stabilization.

It is a further object of the invention that the required level of foodstuff thermal processing, including heating, holding and cooling stages, can be undertaken in a single continuous process.

It is a further object of the invention that such thermal processing to sterilization or pasteurization can be undertaken within the final container without the need to aseptically process, pre-process or sterilize either foodstuff or container prior to filling the product container.

It is another object of the present invention to achieve all stages of such accelerated thermal processing of foodstuffs to pasteurization or sterilization temperatures, including heating, holding and cooling, without any change of state of the thermal processing medium.

It is a further object of the invention to achieve such accelerated thermal processing using a medium which is neither water nor steam.

It is yet a further object of the invention that the composition of the thermal processing medium can be modified during use so as to optimize each individual thermal processing step.

It is another object of the invention, that the thermal processing medium is essentially a non-ionic liquid.

It is still yet another object of the invention that the thermal processing medium maintains at all times a thermal conductivity that is similar to both foodstuff and foodstuff container.

It is yet a further object of the current invention to achieve the required level of foodstuff thermal processing without any need to additionally pressurize nor counter-pressurize the system apparatus nor the thermal processing medium nor the foodstuff container

It is a further object of the invention to achieve such accelerated thermal processing using a medium classified as safe and approved to directly contact food product or food product containers.

It is yet a further object of the current invention to achieve the required level of foodstuff thermal processing without the use of anti-corrosion additives.

It is another object of the invention that the apparatus containing the thermal processing medium can handle any type of product container without further physical modification.

It is a further object of the invention that the medium thermally processing the foodstuffs to a state of stabilization and/or pasteurization and/or sterilization can be continuously maintained in an essentially consistent, non-ionic and corrosion-resistant state.

In another object of the invention that flavor and aroma compounds normally lost during aseptic processing, are retained during pasteurization using the current inventions.

It is a further object of the invention to generate over-pressurization or counter-pressurization if needed using a novel method using fluid or a combination of fluids none of which are water nor steam.

It is a final object of the invention that the method and apparatus thermally processing the foodstuffs to the required state of stabilization or pasteurization or sterilization, be capable of independently controlling and optimizing the system processing parameters including but not limited to capacity, throughput and resultant product quality attributes for each product and container combination.

### BRIEF DESCRIPTION OF DRAWINGS

Figure 1
1A Conventional water/steam Hydrostat configuration
1B Accelerating processing by replacing gaseous steam with liquid, Glycerol-based thermal processing medium.
1C Increasing system pressure by modifying height of thermal processing medium above product.
1D Accelerating processing and increasing system flexibility by replacing gaseous steam section with high volume liquid sprayers.

We will now describe the current invention and any preferred embodiments of the present invention in more detail with reference, as necessary, to any accompanying drawings. Although we detail the current invention with particular reference to hydrostatic sterilizers, it will be obvious to anyone skilled in the art that the detail of the current invention and the embodiments described herein, can be utilized in many different forms, variants and configurations and therefore can be applied in whole or in part to virtually any sterilizer, batch or continuous. Thus the embodiments herein described are merely used to illustrate the potential range of the invention and not to limit its scope.

Continuous sterilization has been commercially available for almost 50 years and is still the process of choice for manufacturers of large volume monoculture production, i.e. high throughput of the same products such as beans, soups and ketchup. While such systems involve major capital expenditure at the outset, they have a long (often 30 years) lifespan and over time become increasingly cost effective. It allows very large volumes of product, often in excess of 400-600 units per minute to be continuously processed to a shelf-stable and refrigeration-free condition.

. However, it has several limiting factors. In addition to the high initial capital costs, the running costs, especially energy costs, are also high and this is becoming increasingly important as energy costs continue to rise. The system is also relatively energy inefficient as the very considerable system infrastructure needed to withstand the high temperatures and particularly, high pressure, also absorbs a large percentage of the available energy.

. While the configuration, form and function of the system is eminently suited to its original purpose of high volume, monoculture production, it is relative inflexible with regard to other applications which again is becoming steadily more important as many more manufacturers produce large volumes of product but from a greater range of product and smaller batch runs. It requires considerable equilibration time for product changeovers. It also has little buffering capacity so product has to completely exit from one chamber/tower before any system changes can be enacted. In practice, the only parameter of the original hydrostat configuration that can be easily adjusted is speed of throughput/dwell time. An example of an already known hydrostatic sterilization device is disclosed in EP 2 223 618. Here also water and steam are used as thermal processing medium. An example of an ultra-high pressure food preservation process using a thermal processing medium which contains a mixture of water and glycol is known from US 6,017,572.

. While there have been a continuous stream of incremental improvements to the established, continuous sterilization technologies (as typified by the teachings of Ono, US7008659 and Perren, USPA 12/648067), more major advances to process efficiencies, product flexibility and improved control have been detailed by Newman (USPA 61/488220, USPA 61/478190, and USPA 61/478491).

. Until recently, the form and function of the continuous sterilizer has been its greatest constraint. Originally designed for metal cans, glass bottles and jars, it has been difficult to adapt the system for many more recent, alternative product containers advances, particularly lightweight pouches, bags and cups. Recent technological advances however (Newman, USPA 61/478190) teach a variety of approaches that allow new packaging materials to be processed by established continuous processing technologies. These advances, coupled with advances in process performance efficiencies and improved control, have further extended its market capabilities.

. However, until now, other major issues such as energy usage and efficiency, maintenance and running costs, cost performance and system flexibility have also been difficult to overcome or improve. We have surprisingly found that we can significantly improve energy usage and system efficiencies without any significant changes to the structure of the conventional, continuous, vertical hydrostat. We will now describe our innovations.

. Newman (USPA 61/488220) teaches that within a conventional continuous hydrostatic sterilizer, almost 50% of the energy generated is effectively wasted as it is used to heat and cool system infrastructure rather than to thermally process product. Further energy losses also occur due to system design, e.g. a need to access especially from the top of the system, conversion of water to steam, thermal 'bleeding' through structure and efficiency of thermal energy transfer.

. Because of its rate of thermal conductivity (approx 0.58W/m/°C), water is actually too efficient. It causes the temperature to rise too quickly in thermally processed solid and semi-solid foodstuffs where the rate of thermal conductivity is typically in the range 0.2-0.3W/m/°C resulting in rapid surface denaturation at the container-product interface, which as the thickness of the denatured layer increases, steadily slows the rate of thermal transfer to the rest of product within the product container, resulting in loss of organoleptic quality and product value.

. Conversely, while it is more efficient with liquid foodstuffs, it is more difficult to control the process as liquid surrounding the inner surfaces of the product container rapidly reaches the required processing temperature, remaining there considerably longer than at the coldest part of the product container, again resulting variable product, a downgrading of organoleptic quality and loss of product value.

. Newman (USPA 61/480521) further teaches that glycerol is a much more effective and efficient thermal processing medium than water as its rate of thermal conductivity is much closer to that of most foodstuffs as well as that of many modern packaging materials.

. In a principle embodiment to the present invention, we have surprisingly found that by replacing the water-steam-water thermal processing medium and configuration within a conventional continuous sterilizer with glycerol or preferably a glycerol-diluent mixture containing less than 20% water as a diluent, or more preferably, a lower viscosity, miscible, non-ionic, food safe diluent, such as aliphatic alcohols like ethanol, (a further embodiment to this invention), we can not only improve the efficiency of the thermal transfer reaction, we can create the necessary space and control within the existing structure of a conventional vertical hydrostat to function either as a product buffering area or product equilibration area.

. Glycerol has a specific density 22-25% greater than water at the same temperature. Consequently, a 7.5m high column of glycerol will generate the same pressure as a 10m high column of water. We have been able to utilize this property to generate the product buffering and product equilibration areas.

. Also, with a specific heat almost twice that of water, glycerol as a thermal processing medium is much more efficient than water. We have surprisingly found that as the thermal conductivity of the glycerol-based medium is closer to both the optimum for thermal transfer within most foodstuffs and many product containers, this allows for much greater control in the raising and lowering of temperatures within the processed foodstuff and its container.

. However, to achieve such control, Newman teaches the need to have either a module where there is a constant temperature or narrow temperature range, to enable temperature equilibration throughout the product or at least a transitional buffering area. We have surprisingly found that we can generate both an efficient buffering area and an effective equilibration area within the previously continuous sterilization system and we incorporate this as a further embodiment to the invention.

. In a conventional, continuous sterilizer, it is the constraining of steam (430) between two adjacent water columns (440) or within the sterilizing apparatus (400) that allows the sterilization phase of product processing to take place. It is this basic function that determines the distinctive vertical orientation (405, 410) and configuration of the hydrostat. It also defines the essentially sequential nature of the processing operation in both batch and continuous sterilizers.

. However, unlike water, which has a higher rate of thermal conductivity than most foods, steam has a lower rate. Consequently, while it is the configuration of the vertical hydrostat that determines the operational sequence, it is usually the capacity and temperature of the steam sector (430) that controls the rate of sterilization and thus the throughput rate. However, to raise the temperature of steam requires an increase in pressure as the volume is fixed. There are practical and cost limits as to how far the steam pressure can be increased.

. Unlike a water-steam based thermal transfer medium, Glycerol-based thermal transfer media do not need any change of state from liquid to steam to reach sterilization temperatures so there is no need for the steam sector to achieve sterilization. As a consequence, Newman (USPA 61/480521) teaches a more efficient and effective horizontal orientation and configuration for continuous sterilization.

. With no change of state in the thermal processing medium to accommodate, there is no need for the hydrostatic columns nor steam headspace. However, we have been able to innovatively utilize the original steam space (430) and the additional space afforded by the lower height requirements (480) of the glycerol-based thermal processing medium to provide significant system flexibility. While it will be obvious to anyone skilled in the art that there are many potential uses for this additional space, we will describe two such applications purely as examples, one related to improved product equilibration, the other to enhanced throughput product processing.

. Within a water-steam-water based sterilization system, the maximum temperature of the water/steam is dependant upon the maximum attainable pressure but it is usually around 121°C (at 2 atmospheres). This, in turn, determines the dwell time in the steam section to achieve effective sterilization and where the coldest part of the product requires at least 4 minutes at this temperature. However, with the ΔT very small and the rate of thermal conductivity of the steam far from optimum, although effective, the sterilization phase is both time and energy inefficient.

. On the other hand, the glycerol-based medium can be heated well beyond the required 121°C so ΔT can be maintained at maximal efficiency. Also, as there is minimal change in the rate of thermal conductivity, there is no loss of process efficiency.

. With the density of the glycerol-based medium increasing as temperature falls, there is also a natural tendency for the thermal processing medium at the highest temperature to rise to the top of the tower/chamber. And finally with viscosity of glycerol being more than double that of water, there is a much better efficiency of heat transfer at the liquid/solid interface.

. Newman (USPA 61/480521) teaches that having each stage of the processing operation can be further optimized by incorporating a thermal processing medium which has a different composition for each of said stages. For example, a glycerol/water mixture in a 66%:34% ratio is capable of remaining a liquid when cooled below -40°C. However such a mixture has a boiling point below that needed for sterilization. Conversely, while a glycerol/water mixture in a 80%:20% ratio is capable of remaining a liquid when heated well above sterilization temperatures, it can only be cooled to -10°C before it changes state. The horizontal but modular configuration detailed in USPA 61/480521 allows for the easy retention of specific thermal transfer medium compositions within each module.

. While a conventional sterilizer with vertical towers or chambers has no such modularity, we have surprising found that we can create the necessary separation between heating/holding and cooling stages using the space (435) vacated by the steam section and thus utilize the additional optimization benefits afforded by different compositions of the thermal processing medium and we incorporate this embodiment within the invention.

. The existing internal walls separating the inlet (405) and outlet (410) sections of the steam tower can be used to effectively separate and maintain the compositionally different thermal processing media for the heating and cooling stages. We have also found that any air space (450) between the two media can be used to effectively continue the heating phase or start the cooling phase by utilizing the spray heads (460) already present.

. In a further embodiment to the invention, we have found that by locating a number of high volume sprayers (460) into the original steam head space (430) and for a distance down both vertical walls of the tower and spraying of the thermal processing medium on to the product, we can better control the rate of thermal transfer into and through the product.

. This has several practical implications. Firstly we can make use of this arrangement to effectively provide a further independent temperature controlled zone with the processing operation. This permits optimum control of the sterilizing step through accelerating, decelerating, extending or modifying the temperature profile of the system and the rate of reaction, so as to minimize deterioration in product organoleptic properties while better compensating for different product properties, particularly with regard to different product type and different container size and properties.

. In a further embodiment, we have also found that as there is no need for a steam zone (430), we can modify the height of the thermal transfer medium within each tower or chamber (480) so as to increase or decrease the space above the columns effectively controlling the dimensions and volume of this additional temperature controlled zone. By controlling the temperature of the fluid exiting the individual spray heads, this adds still further control and flexibility.

. However, it is a further embodiment that amplifies yet another major benefit of the invention.

. Since the development of the continuous sterilizer, there have been many major changes to the way foodstuffs are processed and the properties of the containers within which they are packaged. One of the most successful of these is that of Aseptic Processing. This allows product, particularly liquids and liquids with small solids to be pasteurized under very controlled conditions outside of the container and then packaged under aseptic conditions to yield a high quality product with excellent organoleptic properties. Good examples are milk and orange juice. Sterilized milk and orange juice both have excellent keeping qualities with minimal to nil refrigeration requirement but poor organoleptic qualities. As a consequence, they occupy only a very small portion of the milk and orange juice markets and low pricing. Pasteurized milk occupies the majority of the milk market and pasteurized orange juice virtually all the orange juice market (whether in the concentrate or the finished product format) - and commands a far higher price for the finished product.

. Some of the major drawbacks of the aseptic process are the need to sterilize the container prior to filling, the cost of the packaging, the rigorous demands of the aseptic environment to maintain sterility during container filling and closure, ensure sufficient reduction in microbial numbers and, most especially, the limitations to process product essentially made of solids or with minimal liquid.

. To be able to achieve all of these within the container would allow for very controlled pasteurization of all types of product, solid, liquid and mixtures. In a further embodiment to the invention, we have discovered that we can rapidly convert a continuous hydrostat using the glycerol-based thermal processing medium from a sterilization system to a continuous pasteurization system.

. While it is known to those skilled in the art that a conventional vertical hydrostatic sterilizer can be adapted to run as a pasteurizer, it can be done only with difficulty taking considerable time to equilibrate, at considerable cost as all the vertical towers are interlinked through their water and steam components and the further costs involved to either extract the residual heat from the steam component or vent it.

. Using a thermal processing medium that does not change state at any point during the processing operation means that adjacent legs of the processing towers (405, 410) can be rapidly temperature modified through mixing different temperature streams of the thermal processing medium. Not only have we been able to demonstrate that, in conjunction with an intelligent process controller, (Newman, USPA 61/478491) each leg of the system can switch from sterilizing to pasteurizing mode almost as soon as product exits each leg, so the necessary changes can be done at virtually nil cost.

. Further modification of the temperatures of the thermal processing media in the individual legs of each chamber, will also allow the hydrostat system to function as a product stabilizing system, e.g. destroying enzymes, particularly in nuts, grains, fruits and vegetable foodstuffs that promote product deterioration.

. We have also found that utilizing the glycerol-based thermal processing medium virtually eliminates the need for expensive anti-corrosion chemicals. However, we have been able to further enhance the anti-corrosive nature of those teachings through a further modification of the thermal-processing medium. Newman teaches a thermal processing medium that is essentially glycerol with less than 20% water content and maintains its anti-corrosive properties through continuous filtration through a bed of Zeolite mixture and with the thermal processing medium always containing a minimum concentration of a specific mixture of EDTA-based salts.

. While such a mixture works perfectly adequately within both the horizontal and vertically orientated processing apparatus, in a preferred embodiment to the invention, we have found that replacing some or all of the water component with a non-ionic, GRAS approved diluent such as alcohols or polyols, reduces still further the ability of metal cations to dissolve in the thermal processing medium. We have demonstrated that over time, metal ions from conventional vertical hydrostatic sterilizers leach into the processing fluid, i.e. water, at an increasing rate, resulting in accelerated corrosion within the system structure. With the composition of the thermal processing medium described herein, there is virtually no increase in dissolved cations over time, thus removing the need for any continuous filtering, stabilization and regeneration of the thermal processing medium.

. The structure of the apparatus and the properties of the thermal processing medium described in the method ensure that, for most product/product container combinations, there is no need for any over-pressurization or counter-pressurization of the product container. However for certain product containers such as yoghurt cartons or soup bowls with foil lids if there is sufficient residual gas in the headspace they may be a need to counter the internally generated increase in pressure.

. In normal sterilizing systems, such over- or counter-pressure is usually generated by the steam portion within the tower or chamber, occasionally steam in conjunction with water. With neither water nor steam available in the present invention to create this pressure, a novel approach is needed. While we have shown that the increased specific density of the preferred thermal processing medium contributes to an increased operational pressure, we have surprisingly found that we can flexibly produce any required over-pressure or counter-pressure using pressurized fluids, singly or in combination (470) simply by varying the depth (480) of the fluids, (typically the thermal processing medium) (440) above the product (490). Incorporating this embodiment into the invention allows the current innovative methodology and apparatus to accommodate any type of product and product container to be processed to any required state of stabilization, pasteurization or sterilization.

. We will now illustrate in two examples, the major principles of the invention.

### EXAMPLE 1:

### Utilising the steam space for enhanced product processing.

. A conventional, vertical hydrostatic sterilizer with 20m towers, is filled with a glycerol-diluent mixture as the thermal processing medium. The system is charged with standard 454g cans filled with beans in sauce. Throughput processing capacity is 400 cans per minute. The thermal processing medium is at 130°C.

. Under these processing conditions, it requires a dwell time equivalent to 30m of tower length to achieve effective product sterilization. Production scheduling requires a change to a similar product but in 800g containers. Without any additional heating capacity, production would need to fall to 300 cans per minute to achieve the same degree of product sterilization. The dousing spray heads located in the disused steam section occupy a linear distance of 10m of tower space. The spray head pumps are turned on, spraying the cans with sufficient thermal processing medium at 130°C to keep the containers fully covered continuously.

. The additional heating capacity of the spray heads within the disused steam section enable effective thermal processing of the larger capacity container to sterilization conditions without any change in throughput capacity but significantly improving the cost performance of the system through a 25% enhanced product throughput, NIL energy losses and NIL manufacturing downtime.

### EXAMPLE 2:

### Conversion of vertical Hydrostat from a Product Sterilizer to a Product Pasteurizer.

. A conventional, vertical hydrostatic sterilizer with 20m towers, filled with a glycerol-diluent mixture as the thermal processing medium at 130°C has been sterilizing product in standard 454g cans. Throughput processing capacity is 400 cans per minute.

. Production scheduling requires a change to pasteurizing a fruit juice with pulp in a 600ml polymer container. (The product is packaged according to Newman, USPA 61/478190). The required conditions are a dwell time of 30 seconds at 85°C. The thermal processing medium in the pasteurization leg needs to be 85°C at the bottom and 95°C at the top of the input leg of the sterilization tower. For this temperature profile, total dwell time is equivalent to 9.5m of linear tower length.

. The temperature of the thermal processing medium in the first cooling tower is 100°C at the top to 80°C at the base (first leg) and 70°C at the top to 50°C at the base (second leg). Sufficient of the 130°C medium is withdrawn from the sterilizing tower and stored in a thermally lagged reservoir until required.

. The tower is now made up to the required volume and temperature using the thermal processing medium in the first cooling tower. Similarly, the first heating tower thermal profile is rapidly adjusted by pumping warmer processing medium from the first to the second leg and adding cooled medium from the coolant reservoir. (The intelligent process controller as detailed previously, Newman, USPA 61/478491, calculates the required conditions and optimally controls the transfer of thermal processing fluid from one chamber to another). In this way, product pasteurization can commence almost as soon as product from the previous sterilization process exits each chamber.

. With the tower filled to a height of 7.5m with thermal processing medium, the required additional 2m of tower length are provided by the dousing sprayers positioned in the redundant steam space. However, in this application, because the necessary dwell time is achieved during the progress of the product through just the inlet leg of the pasteurizing chamber, the cooling cycle can commence as soon as the product starts to descend to outlet leg of the chamber. So, the dousing heads on the outlet leg of the chamber, spray thermal processing medium that is 15°C-25°C cooler than used in the heating inlet leg of the chamber.

. Processing within the container ensures that juice and pulp flavor and aroma volatiles are retained within the container and not lost as in many aseptic processes. Temperature profiles are accurately maintained, energy consumption is optimally controlled and there is nil loss of processing capacity.

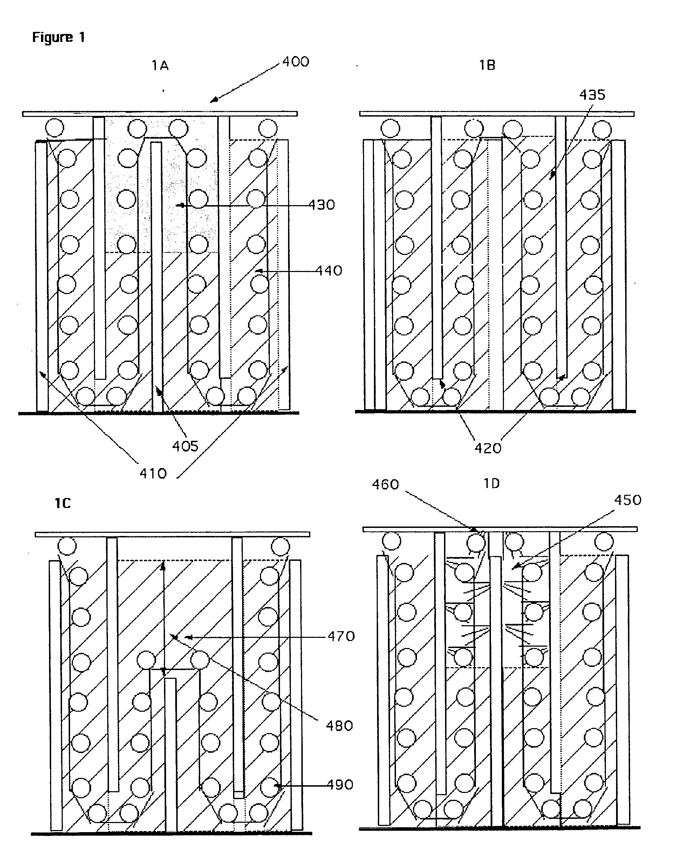

## Claims

1. A method for the accelerated thermal processing of food and drink products to any designated processed state within a conventional batch or continuous food processing system structure containing at least one vertically-orientated chamber or
tower, wherein said process comprises heating, holding and cooling stages, wherein a thermal processing medium is a liquid, approved for direct contact with both food product and food product container, is neither water and/or steam, does not exhibit nor require any change of state but is optimized for each processing step during the processing operation, wherein neither the processed product nor the thermal processing medium require additional pressurization or counter-pressurizing during any processing step and wherein no part of the system structure contains steam.

2. A method according to claim 1, wherein a space previously designed and utilized for retaining steam by means of constraining hydrostatic forces is modified to optimize any designated, thermally-based product processing step through an extension to immersion in or by application of thermal processing medium in the form of a spray.

3. A method according to one of the preceding claims, wherein a configuration of the system structure and the presence of the thermal processing medium within said structure generates sufficient pressure so as to negate the need for any additional pressurization or counter-pressurizing during any processing step.

4. A method according to one of the preceding claims, wherein the thermal processing medium is not an ionic liquid and is permanently maintained in a non-corrosive state without affecting the approved status of the thermal processing medium to directly contact the food product or food product container.

5. A method according to one of the preceding claims, wherein a thermal conductivity of the thermal processing medium is similar to a thermal conductivity of the food product being processed so that the rate of the thermal processing is maintained consistent.

6. A method according to one of the preceding claims, wherein a composition of the thermal processing medium is different for each step of the processing method, wherein
in particular the composition of the thermal processing medium for the heating and
holding steps of the processing operation contains greater than 75% pure glycerol and
less than 75% pure glycerol for any cooling steps, and wherein more in particular the thermal processing medium further contains a non-ionic diluent, preferably an aliphatic alcohol, which is present in the thermal processing medium in the range 0.001 % to 25% by vol.

7. A method according to one of the preceding claims, wherein the thermal processing medium remains a liquid between -30°C and +135°C.

8. A method according to one of the preceding claims, wherein a result of processing to any designated processed state is a sterilized or pasteurized or stabilized product, and wherein in particular such thermal processing to sterilization or pasteurization or stabilization, whether batch or continuous, is undertaken within the product container without the need to aseptically process, pre-process or sterilize either the food product or food product container prior to filling the food product container.

9. A method according to one of the preceding claims, wherein the thermal processing medium contacts the food product and/or the food product container by means of immersion and/or spraying at any required temperature and application rate.

10. A method according to one of the preceding claims, wherein flavor and aroma compounds normally lost during conventional processing, are retained.

11. An apparatus for the accelerated thermal processing of food and drink products to any designated processed state within a conventional batch or continuous food processing system comprising a structure containing at least one chamber or tower, wherein said processing system comprises heating, holding and cooling stages, wherein the thermal processing medium is a liquid, approved for direct contact with both food product and food product container, is neither water and/or steam, does not exhibit nor require any change of state but is optimized for each processing step during the processing operation, wherein neither the processed product nor the thermal processing medium require additional pressurization or counter-pressurizing during any processing step and wherein no part of the apparatus contains steam and wherein a space previously designed and utilized for retaining steam by means of constraining hydrostatic forces is adaptable to optimize any thermally-based product processing step through an extension to immersion in or by application of thermal processing medium in the form of a spray,
wherein the existing system structure contains at least one, preferably vertically-orientated, chamber or tower.

12. An apparatus, according to claim 11, wherein the accelerated thermal process is undertaken in an existing system structure that remains unchanged.

13. An apparatus, according to one of the preceding claims 11-12, wherein the thermal processing medium is permanently maintained in a non-corrosive state without affecting an approved status of the thermal processing medium to directly contact food product or food product container, and/or wherein the configuration of physical structure and the presence of the thermal processing medium within said structure generates sufficient pressure so as to negate the need for any additional pressurization or counter-pressurizing during any processing step.

14. An apparatus according to one of the preceding claims 11-13, wherein a composition of the thermal processing medium therein is different for each step of the processing operation.

15. An apparatus according to claim 14, wherein the composition of the thermal processing medium therein for the heating and holding steps of the processing operation contains greater than 75% pure glycerol and less than 75% pure glycerol for any cooling steps.

## Patentansprüche

1. Verfahren für die beschleunigte thermische Verarbeitung von Nahrungsmittel- und Getränkeprodukten zu einem vorbestimmten Verarbeitungszustand in einer herkömmlichen Batchoder kontinuierlichen Nahrungsmittelverarbeitungssystemstruktur umfassend mindestens eine vertikal ausgerichtete Kammer oder einen vertikal ausgerichteten Turm, wobei die Verarbeitung Phasen des Erwärmens, des Haltens der Temperatur und des Abkühlens beinhaltet, wobei ein thermisches Verarbeitungsmedium eine Flüssigkeit ist, für einen direkten Kontakt mit Nahrungsmittelprodukten und Nahrungsmittelproduktbehältern zugelassen ist, kein Wasser und/oder Dampf ist, eine Zustands-änderung weder aufweist noch erfordert, sondern für jeden Verarbeitungsschritt während des Verarbeitungsvorgangs optimiert ist, wobei weder das verarbeitete Produkt noch das thermische Verarbeitungsmedium eine zusätzliche Druckbehandlung oder Gegendruckbehandlung während eines Verarbeitungsschritts erfordert und wobei kein Teil der Systemstruktur Dampf enthält.

2. Verfahren nach Anspruch 1, wobei ein Raum, der vormals für das Sammeln von Dampf durch das Aufbringen hydrostatischer Kräfte ausgestaltet und verwendet wurde, verändert ist, um einen vorbestimmten, thermisch basierten Produktverarbeitungsschritt durch eine Erweiterung zum Eintauchen in oder durch Auftragen von thermischem Verarbeitungsmedium in Form eines Sprays zu optimieren.

3. Verfahren nach einem der vorhergehenden Ansprüche, wobei eine Anordnung der Systemstruktur und das Vorhandensein des thermischen Verarbeitungsmediums in der Struktur genügend Druck erzeugt, sodass eine zusätzliche Druckbehandlung oder Gegendruckbehandlung während eines Verarbeitungsschritts unnötig ist.

4. Verfahren nach einem der vorhergehenden Ansprüche, wobei das thermische Verarbeitungsmedium keine ionische Flüssigkeit ist und dauerhaft in einem korrosionsfreien Zustand gehalten wird, ohne dass die Zulassung des thermischen Verarbeitungsmediums für einen direkten Kontakt mit Nahrungsmittelprodukten und Nahrungsmittelproduktbehältern beeinträchtigt ist.

5. Verfahren nach einem der vorhergehenden Ansprüche, wobei eine Wärmeleitfähigkeit des thermischen Verarbeitungsmediums einer Wärmeleitfähigkeit des zu verarbeitenden Nahrungsmittelprodukts entspricht, sodass eine gleichbleibende Rate bei der thermischen Verarbeitung aufrechterhalten wird.

6. Verfahren nach einem der vorhergehenden Ansprüche, wobei eine Zusammensetzung des thermischen Verarbeitungsmediums für jeden Schritt des Verarbeitungsverfahrens unterschiedlich ist, wobei insbesondere die Zusammensetzung des thermischen Verarbeitungsmediums für die Schritte des Erwärmens und des Haltens der Temperatur des Verarbeitungsvorgangs mehr als 75% reines Glyzerin sowie weniger als 75% reines Glyzerin für Schritte des Abkühlens umfasst, und wobei im Einzelnen das thermische Verarbeitungsmedium weiterhin ein nicht-ionisches Verdünnungsmittel, vorzugsweise einen aliphatischen Alkohol, umfasst, welches in dem thermischen Verarbeitungsmedium im Bereich von 0,001% bis 25% Vol. vorhanden ist.

7. Verfahren nach einem der vorhergehenden Ansprüche, wobei das thermische Verarbeitungsmedium zwischen -30° C und +135° C einen flüssigen Zustand aufweist.

8. Verfahren nach einem der vorhergehenden Ansprüche, wobei ein Ergebnis der Verarbeitung zu einem vorbestimmten Verarbeitungszustand ein sterilisiertes oder pasteurisiertes oder stabilisiertes Produkt ist, und wobei insbesondere eine solche thermische Verarbeitung zur Sterilisation oder Pasteurisierung oder Stabilisierung, ob Batch- oder kontinuierliche Verarbeitung, in dem Produktbehälter vorgenommen wird, ohne dass das Nahrungsmittelprodukt oder der Nahrungsmittelproduktbehälter vor Befüllen des Nahrungsmittelproduktbehälters aseptisch behandelt, vorbehandelt oder sterilisiert werden muss.

9. Verfahren nach einem der vorhergehenden Ansprüche, wobei das thermische Verarbeitungsmedium mit dem Nahrungsmittelprodukt und/oder dem Nahrungsmittelproduktbehälter durch Eintauchen und/oder Besprühen bei einer erforderlichen Temperatur und Auftragungsrate in Kontakt kommt.

10. Verfahren nach einem der vorhergehenden Ansprüche, wobei Geschmacks- und Aromastoffe, die normalerweise während einer herkömmlichen Verarbeitung verloren gehen, erhalten werden.

11. Vorrichtung für die beschleunigte thermische Verarbeitung von Nahrungsmittel- und Getränkeprodukten zu einem vorbestimmten Verarbeitungszustand in einem herkömmlichen Batchoder kontinuierlichen Nahrungsmittelverarbeitungssystem, beinhaltend eine Struktur umfassend mindestens eine Kammer oder einen Turm, wobei das Verarbeitungssystem Phasen des Erwärmens, des Haltens der Temperatur und des Abkühlens beinhaltet, wobei das thermische Verarbeitungsmedium eine Flüssigkeit ist, für einen direkten Kontakt mit Nahrungsmittelprodukten und Nahrungsmittelproduktbehältern zugelassen ist, kein Wasser und/oder Dampf ist, eine Zustandsänderung weder aufweist noch erfordert, sondern für jeden Verarbeitungsschritt während des Verarbeitungsvorgangs optimiert ist, wobei weder das verarbeitete Produkt noch das thermische Verarbeitungsmedium eine zusätzliche Druckbehandlung oder Gegendruckbehandlung während eines Verarbeitungsschritts erfordert und wobei kein Teil der Vorrichtung Dampf enthält und wobei ein Raum, der vormals für das Sammeln von Dampf durch das Aufbringen hydrostatischer Kräfte ausgestaltet und verwendet wurde, veränderbar ist, um einen thermisch basierten Produktverarbeitungsschritt durch eine Erweiterung zum Eintauchen in oder durch Auftragen von thermischem Verarbeitungsmedium in Form eines Sprays zu optimieren,
wobei die vorhandene Systemstruktur mindestens eine vorzugsweise vertikal ausgerichtete Kammer oder einen vorzugsweise vertikal ausgerichteten Turm umfasst.

12. Vorrichtung nach Anspruch 11, wobei die beschleunigte thermische Verarbeitung in einer vorhandenen Systemstruktur vorgenommen wird, die unverändert bleibt.

13. Vorrichtung nach einem der vorhergehenden Ansprüche 11-12, wobei das thermische Verarbeitungsmedium dauerhaft in einem korrosionsfreien Zustand gehalten wird, ohne dass die Zulassung des thermischen Verarbeitungsmediums für einen direkten Kontakt mit Nahrungsmittelprodukten und Nahrungsmittelproduktbehältern beeinträchtigt ist, und/oder wobei die Anordnung der baulichen Struktur und das Vorhandensein des thermischen Verarbeitungsmediums in der Struktur genügend Druck erzeugt, sodass eine zusätzliche Druckbehandlung oder Gegendruckbehandlung während eines Verarbeitungsschritts unnötig ist.

14. Vorrichtung nach einem der vorhergehenden Ansprüche 11-13, wobei eine Zusammensetzung des thermischen Verarbeitungsmediums darin für jeden Schritt des Verarbeitungsvorgangs unterschiedlich ist.

15. Vorrichtung nach Anspruch 14, wobei die Zusammensetzung des thermischen Verarbeitungsmediums darin für die Schritte des Erwärmens und des Haltens der Temperatur des Verarbeitungsvorgangs mehr als 75% reines Glyzerin sowie weniger als 75% reines Glyzerin für Schritte des Abkühlens umfasst.

## Revendications

1. Procédé pour le traitement thermique accéléré de denrées alimentaires et de boissons en un quelconque état traité désigné dans une structure de système de traitement de denrées alimentaires continu ou par lots classique contenant au moins une chambre ou une tour orientée verticalement, dans lequel ledit processus comprend des étapes de chauffage, de maintien et de refroidissement, dans lequel un milieu de traitement thermique est un liquide, approuvé pour un contact direct à la fois avec une denrée alimentaire et un récipient de la denrée alimentaire, qui n'est ni de l'eau ni de la vapeur, qui ne présente et ne nécessite pas de changement d'état, mais qui est optimisé pour chaque étape de traitement pendant l'opération de traitement, dans lequel ni la denrée traitée ni le milieu de traitement thermique ne nécessite une pressurisation ou contre-pressurisation supplémentaire pendant une quelconque étape de traitement, et dans lequel aucune partie de la structure de système ne contient de vapeur.

2. Procédé selon la revendication 1, dans lequel un espace conçu et utilisé précédemment pour conserver la vapeur au moyen de forces hydrostatiques contraignantes est modifié pour optimiser une étape de traitement thermique de denrée désignée par une extension de l'immersion dans le milieu de traitement thermique ou par l'application de celui-ci sous la forme d'une pulvérisation.

3. Procédé selon l'une des revendications précédentes, dans lequel une configuration de la structure de système et la présence du milieu de traitement thermique dans ladite structure génèrent une pression suffisante pour annuler le besoin d'une quelconque pressurisation ou contre-pressurisation supplémentaire pendant une quelconque étape du traitement.

4. Procédé selon l'une des revendications précédentes, dans lequel le milieu de traitement thermique n'est pas un liquide ionique et est maintenu en permanence dans un état non corrosif sans affecter l'état approuvé du milieu de traitement thermique pour un contact direct avec la denrée alimentaire ou avec le récipient de la denrée alimentaire.

5. Procédé selon l'une des revendications précédentes, dans lequel une conductivité thermique du milieu de traitement thermique est similaire à une conductivité thermique de la denrée alimentaire en cours de traitement de sorte que la vitesse du traitement thermique est maintenue constante.

6. Procédé selon l'une des revendications précédentes, dans lequel une composition du milieu de traitement thermique est différente à chaque étape du procédé de traitement, dans lequel, en particulier, la composition du milieu de traitement thermique contient, pour les étapes de chauffage et de maintien de l'opération de traitement, plus de 75 % de glycérol pur et contient, pour toutes les étapes de refroidissement, moins de 75 % de glycérol pur, et dans lequel, plus particulièrement, le milieu de traitement thermique contient en outre un diluant non ionique, de préférence un alcool aliphatique, qui est présent dans le milieu de traitement thermique dans la plage de 0,001 % à 25 % en volume.

7. Procédé selon l'une des revendications précédentes, dans lequel le milieu de traitement thermique reste liquide entre -30 °C et +135 °C.

8. Procédé selon l'une des revendications précédentes, dans lequel un résultat du traitement en un quelconque état traité désigné est une denrée stérilisée ou pasteurisée ou stabilisée, et dans lequel, en particulier, ce traitement thermique pour une stérilisation ou une pasteurisation ou une stabilisation, que ce soit par lots ou en continu, est entrepris dans le récipient de la denrée sans le besoin de traiter de manière aseptique, de prétraiter ou de stériliser, soit la denrée alimentaire, soit le récipient de la denrée alimentaire, avant de remplir le récipient de la denrée alimentaire.

9. Procédé selon l'une des revendications précédentes, dans lequel le milieu de traitement thermique vient en contact avec la denrée alimentaire et/ou avec le récipient de la denrée alimentaire au moyen d'une immersion et/ou d'une pulvérisation à n'importe quelles température et vitesse d'application requises.

10. Procédé selon l'une des revendications précédentes, dans lequel les saveurs et les arômes normalement perdus pendant un traitement classique sont conservés.

11. Appareil pour le traitement thermique accéléré de denrées alimentaires et de boissons en un quelconque état traité désigné dans un système de traitement de denrées alimentaires en continu ou par lots classique comprenant une structure contenant au moins une chambre ou une tour, dans lequel ledit système de traitement comprend des étapes de chauffage, de maintien et de refroidissement, dans lequel le milieu de traitement thermique est un liquide, approuvé pour un contact direct à la fois avec une denrée alimentaire et un récipient de la denrée alimentaire, n'est ni de l'eau ni de vapeur, ne présente ni ne nécessite de changement d'état, mais est optimisé pour chaque étape de traitement pendant l'opération de traitement, dans lequel ni la denrée traitée, ni le milieu de traitement thermique ne nécessite une pressurisation ou une contre-pressurisation supplémentaire pendant une quelconque étape de traitement, et dans lequel aucune partie de l'appareil ne contient de la vapeur, et dans lequel un espace conçu et utilisé précédemment pour maintenir la vapeur au moyen de forces hydrostatiques contraignantes peut être adapté pour optimiser une quelconque étape de traitement thermique de denrée par une extension de l'immersion dans un milieu de traitement thermique ou par l'application de celui-ci sous la forme d'une pulvérisation, dans lequel la structure de système existante contient au moins une chambre ou une tour orientée de préférence verticalement.

12. Appareil, selon la revendication 11, dans lequel le traitement thermique accéléré est entrepris dans une structure de système existante qui reste inchangée.

13. Appareil, selon l'une des revendications 11 et 12 précédentes, dans lequel le milieu de traitement thermique est maintenu en permanence dans un état non corrosif sans affecter un état approuvé du milieu de traitement thermique pour un contact direct avec une denrée alimentaire ou avec un récipient de la denrée alimentaire, et/ou dans lequel la configuration de la structure physique et la présence du milieu de traitement thermique dans ladite structure génèrent une pression suffisante pour annuler le besoin d'une quelconque pressurisation ou contre pressurisation supplémentaire pendant une quelconque étape de traitement.

14. Appareil selon l'une des revendications 11 à 13 précédentes, dans lequel une composition du milieu de traitement thermique dans celui-ci est différente à chaque étape de l'opération de traitement.

15. Appareil selon la revendication 14, dans lequel la composition du milieu de traitement thermique dans celui-ci contient, pour les étapes de chauffage et de maintien de l'opération de traitement, plus de 75 % de glycérol pur et contient, pour toutes les étapes de refroidissement, moins de 75 % de glycérol pur.
